Europäisches Patentamt

European Patent Office

Office européen des brevets

(19)

(11) Numéro de publication : **0 105 775**
**B1**

# FASCICULE DE BREVET EUROPÉEN

(12)

(45) Date de publication du fascicule du brevet :
**11.01.89**

(51) Int. Cl.⁴ : **B 29 C 61/06, C 08 L 65/00**

(21) Numéro de dépôt : **83401801.2**

(22) Date de dépôt : **15.09.83**

(54) **Produits finis à fonction mémoire.**

(30) Priorité : **20.09.82 JP 163775/82**
**08.02.83 FR 8301922**

(43) Date de publication de la demande :
**18.04.84 Bulletin 84/16**

(45) Mention de la délivrance du brevet :
**11.01.89 Bulletin 89/02**

(84) Etats contractants désignés :
**AT BE CH DE FR GB IT LI LU NL SE**

(56) Documents cités :
**FR--A-- 2 140 620**
**US--A-- 4 193 899**
**CHEMICAL ABSTRACTS, vol. 83, no. 4, 28 juillet 1975,**
**page 57, résumé no. 29342n, COLUMBUS, Ohio (US)**

(73) Titulaire : **NORSOLOR S.A.**
**Tour Aurore Place des Reflets**
**F-92080 Paris la Defense Cédex 5 (FR)**

(72) Inventeur : **Stein, Claude**
**1 Allée des Basses Garennes**
**F-60270 Gouvieux (FR)**
Inventeur : **Nagai, Hitochi**
**2-1333 Matsudo**
**Matsudo-shi Chiba Prefecture (JP)**
Inventeur : **Ueda, Akio**
**1403 Matano-cho Totsuka-Ku**
**Yokohama-Shi Kanagawa Prefecture (JP)**
Inventeur : **Isomura, Satoru**
**4135 Akawa-Cho Seya-Ku**
**Yokohama-Shi Kanagawa Prefecture (JP)**

(74) Mandataire : **Dubost, Thierry**
**c/o NORSOLOR Service Propriété Industrielle B.P. 57**
**F-62670 Mazingarbe (FR)**

Jouve, 18, rue St-Denis, 75001 Paris, France

## Description

La présente invention a pour objet des produits finis en matériau polymère à fonction mémoire de forme et de dimension du produit. Ces produits finis peuvent être utilisés selon un procédé consistant à déformer ledit matériau polymère à l'état solide, puis à le refroidir jusqu'à la température de transition vitreuse du polymère, et enfin à l'échauffer au-dessus de la température de transition vitreuse du polymère pour reprendre sa forme initiale.

Les homopolymères et copolymères amorphes et semi-cristallins du norbornène et de ses dérivés alcoylés, alcoxylés, mono- ou diestérifiés, imides et acides carboxyliques sont déjà connus, notamment par les brevets français n° 1 543 797, 1 556 215, 1 594 934, 1 597 727, 1 598 320 et 1 599 185.

De tels polymères ont été essentiellement obtenus suivant un processus catalytique basé sur des sels de métaux de transition comme les chlorures de ruthénium et d'iridium ou encore basé sur des systèmes Ziegler associant des métaux comme le molybdène ou le tungstène à des chlorures de titane ou des alkyl-aluminiums. Ces systèmes catalytiques conduisent presqu'exclusivement à un enchaînement moléculaire par ouverture du cycle bicycloepténique suivant le mécanisme à présent bien connu de métathèse.

Il s'est avéré que les températures de transition vitreuse (Tg) de tels polymères peuvent être sélectionnées à volonté en modifiant soit la nature et la longueur des chaînes substituées R et R' sur le cycle cyclopentane soit les taux respectifs des comonomères, soit encore le système catalytique ou les trois facteurs simultanément. La température de transition vitreuse de ces polymères peut ainsi aisément varier entre — 90 °C et + 90 °C. En général ces polymères ne présentent pas de propriétés caoutchouteuses à température ambiante. Toutefois ils présentent la propriété d'absorber une quantité importante d'huile, ce qui a pour effet d'abaisser leur température de transition vitreuse et de leur conférer des propriétés caoutchouteuses. En utilisant ces propriétés on peut les utiliser pour la production de produits vulcanisés, tout comme les caoutchoucs naturels ou synthétiques ordinaires.

Par ailleurs la polymérisation du diméthanooctahydronaphtalène et de ses dérivés substitués ainsi que la copolymérisation de ces monomères entre eux ou avec le norbornène et ses dérivés substitués ou encore avec des monomères oléfiniques tels que le styrène ou l'acénaphtylène est déjà connue, notamment par le brevet français n° 1 535 460. De tels homo et copolymères obtenus essentiellement par ouverture de cycle ont, suivant les taux respectifs de co- ou termonomère et la nature des substituants, des températures de transition vitreuse allant de — 60° à + 200 °C.

Des travaux ont aussi été publiés sur des copolymères du norbornène ou du diméthanooctahydronaphtalène ou leurs dérivés substitués avec des oléfines telles que l'éthylène, le propylène (brevet américain n° 4 320 239), le butène-1 ou l'hexène-1 (brevet américain n° 4 136 248).

Le brevet FR-A-2 140 620 considéré pour le préambule de la revendication 1 décrit un film de polyoléfine contenant un photosensibilisateur, tout d'abord soumis à des radiations lumineuses non ionisantes puis étiré d'au moins 100 % dans au moins une direction, à une température inférieure à sa température de dégradation, puis refroidi avant de relâcher la tension. La polyoléfine peut être un copolymère d'éthylène contenant jusqu'à 20 % environ en poids (de préférence jusqu'à 10 % en poids) de norbornène, norbornadiène ou éthylidène norbornène. Selon ce document il est donc nécessaire, pour que la fonction mémoire se manifeste, que la composition contienne un photosensibilisateur et qu'elle soit soumise à des radiations lumineuses non ionisantes, donc qu'elle soit réticulée.

Le brevet US-A-4 193 899 décrit un procédé de transformation d'une composition comprenant un polymère élastomérique sulfoné. Ce dernier peut être dérivé d'un terpolymère comprenant de 40 à 80 % en poids d'éthylène, de 1 à 10 % en poids d'un monomère diénique et le reste de propylène. Le monomère diénique peut être notamment le 5-éthylidène-2-norbornène, le 5-méthylène-2-norbornène ou le 5-propényl-2-norbornène.

La présente invention montre que, pour qu'une composition présente une fonction mémoire, il n'est pas nécessaire qu'elle contienne des polymères sulfonés ou des polymères comprenant des motifs dérivés de l'éthylidène-norbornène comme dans le brevet US-A-4 193 899, ni qu'elle contienne un photosensibilateur ou qu'elle soit réticulée, comme dans le brevet FR-A-2 140 620. De plus la demanderesse a constaté que si un comonomère du type éthylène est présent dans le polymère de norbornène, le phénomène de mémoire est amoindri.

La présente invention concerne des produits finis en matériau polymère à fonction mémoire de forme et de dimension de produit, c'est-à-dire capables de reprendre leur forme initiale après avoir été soumis d'abord à une déformation à l'état solide, puis refroidis jusqu'à la température de transition vitreuse du polymère et enfin réchauffés au-dessus de ladite température, constitués d'une composition comprenant :

- au moins un polymère (A) choisi parmi :

• les homopolymères et copolymères amorphes et semi-cristallins du norbornène et de ses dérivés alcoylés, cyanés, alcoxylés, mono- ou diestérifiés, imides et acides carboxyliques,

• les homopolymères et copolymères du diméthanooctahydronaphtalène et de ses dérivés, et

• les copolymères du diméthanooctahydronaphtalène et d'un monomère choisi parmi le norbornène et ses dérivés, le styrène, l'acénaphtylène et le dicyclopentadiène, et

- au moins un polymère thermoplastique (B), caractérisés en ce que ladite composition comprend au moins 25 % en poids du polymère (A) et au plus 75 % en poids du polymère thermoplastique (B).

Le polymère (A) a un poids moléculaire compris par exemple entre 300 000 et 4 000 000. Sa température de transition vitreuse est comprise entre — 90 °C et + 200 °C, et de préférence entre + 10 °C et + 120 °C.

Le phénomène de mémoire sera d'autant plus partiel que les homopolymères ou copolymères (A) auront des masses moléculaires, donc des longueurs de chaîne, plus faibles et/ou que les substituants portés par les noyaux mono, bi ou tricycliques des chaînes seront constitués de chaînes linéaires plus longues. Le phénomène de mémoire ne sera aussi que partiel dans des co- ou terpolymères des bicycloheptènes et/ou dimétha-nocyclonaphtalènes avec des co- ou termonomères du type éthylène, propylène et sera fonction du taux de co- ou termonomère. Par contre, la présence de motifs polycyclo- ou polydicyclopen-tadiène dans les chaînes ne nuira nullement à l'effet mémoire.

Le polymère (B) peut être choisi notamment parmi le polystyrène, le polychlorure de vinyle, le polyéthylène, le polypropylène, le polybutène, le polyméthacrylate de méthyle, les copolymères acrylonitrile-butadiène-styrène et les résines d'hydrocarbures.

Il est aussi possible d'ajouter un composé huileux au polymère en vue de lui conférer de l'élasticité et de contrôler sa dureté. Le composé huileux utilisé est soit un lubrifiant soit un plastifiant. On peut utiliser les plastifiants courants des caoutchoucs et des résines de chlorure de vinyle, tels que le phtalate de dibutyle, le phtalate de 2-diéthylhexyle, le sébaçate de dioctyle, l'adipate de dioctyle, le phosphate de tricrésyle, l'huile de soja époxydée, l'huile de sésame, l'adipate de polypropylène, etc. Le lubrifiant peut être, par exemple, une huile de mise en oeuvre utilisée pour les caoutchoucs, telle qu'une huile paraffinique, naphténique ou aromatique.

Il est aussi possible, en vue d'ajuster les propriétés du produit fini, d'utiliser un agent réticulant tel que le soufre ou les peroxydes organiques. Des accélérateurs de vulcanisation, des activateurs et d'autres agents aidant la réticulation peuvent être utilisés simultanément avec l'agent réticulant.

La quantité de composé huileux mélangée avec le polymère ne dépasse pas 10 % en poids. La quantité de l'agent réticulant ajouté au polymère ne dépasse pas 10 % en poids. En effectuant le mélange, il est possible d'ajouter des stabilisants, colorants, agents renforçants organiques ou minéraux, retardateurs d'inflammation, charges organiques ou minérales dans les quantités habituelles.

La composition utilisée dans les produits finis à fonction mémoire selon l'invention est préparée par mélange des constituants dans des appareils connus tels qu'un mélangeur de type Banbury.

Les produits finis à fonction mémoire selon l'invention peuvent être utilisés selon un procédé consistant à déformer ledit produit fini à l'état solide, puis à le refroidir jusqu'à la température de transition vitreuse du polymère, et enfin à le réchauffer au-dessus de ladite température pour reprendre sa forme initiale. Dans la première étape de ce procédé, on déforme le produit fini de préférence à une température inférieure à la température de mise en oeuvre du polymère.

Par température de mise en œuvre, on entend la température de moulage ou calandrage pour des produits moulés ou injectés, la température de soufflage pour des films. Cette température de mise en œuvre est généralement comprise entre 100° et 300 °C et dépend, de manière connue en soi, de la température de transition vitreuse et du poids moléculaire du polymère. Lorsque le produit fini soumis à déformation est un produit moulé, il convient bien entendu qu'il ait une forme prédéterminée et une résistance suffisante, et par conséquent qu'il ait été obtenu dans des conditions de moulage satisfaisantes, telles que notamment une pression de moulage comprise entre 50 et 300 kg/cm².

Bien qu'il soit possible de déformer le produit fini à une température inférieure à la température de transition vitreuse du polymère, on déformera de préférence le produit fini à une température allant de la température de transition vitreuse jusqu'à 30 °C au-dessus de celle-ci. La méthode de déformation n'est pas particulièrement limitée : en fonction de la forme et de l'épaisseur du produit fini, celui-ci est placé dans une atmosphère maintenue à la température voulue (par exemple air chaud, liquide chaud, vapeur, etc.) puis déformé (par exemple par étirage ou pliage) à la main ou au moyen d'un outillage approprié.

Lorsque la température de déformation est supérieure à la température de transition vitreuse du polymère, le produit déformé doit être refroidi immédiatement après la déformation jusqu'à la température de transition vitreuse (ou en dessous de celle-ci) pour fixer la déformation. Si la température de déformation est inférieure ou égale à la température de transition vitreuse, la déformation sera fixée à cette température et, par conséquent, il ne sera pas nécessaire de refroidir le produit déformé.

Pour supprimer la déformation du produit fini et lui faire reprendre sa forme initiale, on le chauffe jusqu'à une température supérieure à la température de déformation mais inférieure à la température de mise en œuvre du polymère. Au fur et à mesure que la température est plus élevée, la durée requise pour que le produit fini reprenne sa forme initiale devient plus courte. En général cette durée n'excède pas 1 minute. Il n'y a pas de restriction à la méthode de chauffage utilisable : celle-ci peut comporter l'emploi d'air chaud, de vapeur d'eau, d'un gaz inerte chaud (tel que l'azote), etc.

Grâce à la fonction mémoire du produit fini selon l'invention, lorsque la forme de celui-ci le rend difficile à monter, assembler ou transporter, ledit produit fini peut être déformé pour obtenir une forme aisée à manipuler puis, après montage, assemblage ou transport, récupéré sous sa forme initiale par chauffage.

L'association de l'existence du phénomène mémoire au voisinage de Tg d'une part la possibilité d'adapter la valeur de Tg dans un très large domaine de températures d'autre part ; permet d'envisager de nombreuses applications dans les secteurs d'usages les plus divers lorsque la thermoréversibilité de forme géométrique est un but recherché. Citons à titre indicatif et nullement limitatif :
- Jeux et jouets déformables
- Objets ménagers et électroménagers
- Instruments et dispositifs de sécurité thermosensibles
- Eléments d'arts et décoration
- Instruments et dispositifs médicaux et paramédicaux
- Matériels de bureau
- Matériels de jardinage
- Objets éducatifs
- Farces et attrapes
- Accessoires de bâtiment et sanitaire
- Accessoires d'automobile
- Films et feuilles d'emballage rétractables.

De par sa température de transition vitreuse proche de 37 °C, le polybicycloheptène-2 ou polynorbornène présente un intérêt particulier pour nombre d'applications ou la thermoréversibilité après déformation mécanique est réalisable par simple immersion dans un fluide (eau ou air par exemple) à température modérée, les objets concernés pouvant se présenter sous forme de plaques, feuilles, films, joncs, profilés, fils, fibres et sous forme d'objets moules ou soufflés plus complexes. Citons à titre indicatif et non limitatif :
- Eléments de couplage pour tuyaux de différents diamètres
- Accessoires de jeux de construction
- Eléments de mobiles suspendus
- Jeux de pliage
- Accessoires de maquettes
- Livres d'enfants infroissables
- Accessoires de trains et voitures miniature (tunnels, plans inclinés)
- Jouets de bain
- Animaux ou poupées flexibles
- Cibles de tir
- Inserts de chaussures
- Accessoires de ski
- Embouts d'aspirateurs
- Accessoires de pâtisserie
- Bacs à glaçons
- Objet de camping encombrants
- Cintres adaptables
- Films et filets rétractables
- Stores sensibles
- Joints d'isolation et de calfeutrage
- Fusibles
- Dispositifs d'alarme
- Accessoires de sculpture

- Lampes articulables
- Abat-jour ajustable
- Enseignes de publicité, présentoirs
- Fleurs artificielles
- Récipients à formes adaptables
- Accessoires de coiffure adaptables
- Plaques à braille effaçables
- Ardoises thermosensibles
- Lettres d'alphabet magique
- Matrices d'imprimerie récupérables
- Supports publicitaires
- Règles déformables, normographes
- Prothèses médicales
- Dossiers de fauteuils d'handicapés
- Manchons orthopédiques, corsets, minerves
- Thermomètres géométriques
- Pare-chocs d'automobile
- Etc...

Les exemples suivants ont pour objet d'illustrer la présente invention :

Exemple 1

On réalise par moulage/compression à 140 °C pendant 10 minutes une plaque de 2 mm d'épaisseur à partir de poudre de polybicycloheptène-2 commercialisée par CdF CHIMIE sous la marque NORSOREX N. Ce produit présente une température de transition vitreuse de + 37 °C déterminée par analyse thermique différentielle. Il a une masse moléculaire Mw de 2 000 000.

a) On procède à 25 °C à un pliage d'angle 180° sur cette plaque. Le pliage subsiste après relâchement de la contrainte. On immerge cette plaque pliée dans de l'eau à 42 °C : la plaque revient à sa forme initiale.

b) Sur la même plaque on procède à 25 °C à un enroulement autour d'un mandrin de 10 mm de diamètre. La plaque reste enroulée après suppression de la contrainte. Par simple immersion dans de l'eau à 42 °C, la plaque se déroule instantanément et reprend sa forme initiale.

c) La même plaque moulée initialement à 140 °C est pliée à angle droit dans un gabarit métallique chauffé à 170 °C pendant 10 minutes. Après refroidissement, cette plaque est déformée à plat sous une presse à 25 °C. La plaque plane ainsi obtenue retrouve sa forme en angle droit par simple immersion dans de l'eau à 42 °C.

d) Dans la plaque moulée en (a) ci-dessus on découpe une éprouvette de 3 mm de large et de 100 mm de long que l'on soumet à 25 °C à une élongation dans un dynamomètre jusqu'à atteindre une longueur de 130 mm. Cette longueur est maintenue après suppression de la contrainte. L'éprouvette retrouve sa longueur de 100 mm dès immersion dans de l'eau à 45 °C.

Exemple 2

On procède comme dans l'exemple 1 en moulant une plaque de 2 mm d'épaisseur sous presse à 150 °C à partir de polycyclo 2,2,1-heptène-2-carboxylate de méthyle-5 ayant une masse moléculaire Mw de 350 000 et dont la température de transition vitreuse déterminée par analyse thermique différentielle est de + 65 °C.

a) Après moulage et refroidissement à température ambiante, on immerge cette plaque dans un bain d'eau chauffée à 45 °C et on procède à son pliage suivant un angle de 180°. La plaque reste dans cette configuration après relâchement de la contrainte. Dès immersion dans de l'eau chauffée à 70 °C elle retrouve sa forme initiale plane.

b) On utilise cette plaque comme cible de tir et on procède à des tirs à six mètres de distance avec une carabine à air comprimé chargée de balles de plomb de 5,5 mm de diamètre. Les impacts des balles relevés sur la plaque de polymère ont une profondeur de 0,5 à 0,6 mm. L'immersion de la plaque ainsi déformée dans de l'eau à 70 °C provoque immédiatement la disparition des traces d'impact.

Exemple 3

On effectue le moulage à 150 °C, pendant 10 minutes et sous une pression de 130 kg/cm², d'une poudre de polybicycloheptène-2 commercialisée par CdF CHIMIE sous la marque NORSOREX pour obtenir un objet cylindrique de 5 mm de diamètre et 20 mm de longueur. Dans l'eau chaude à 45 °C on tient cet objet par ses deux extrémités au moyen de pinces et on l'étire jusqu'à un diamètre de 3 mm. Lorsque la température revient à l'ambiante, la forme de l'objet se fixe à l'état étiré. Lorsque l'objet est à nouveau plongé dans l'eau chaude à 45 °C, il retrouve sa forme initiale au bout d'environ 10 secondes.

Exemple 4

Un anneau de section circulaire ayant un diamètre intérieur de 30 mm et une épaisseur de 2 mm est moulé dans les conditions de l'exemple 3. On lui donne la forme d'un 8 par torsion répétée dans l'air chaud à 50 °C puis, dans cet état, on le plonge dans l'eau à 25 °C : la forme du 8 subsiste. Lorsque l'objet est alors placé dans de l'air chaud à 45 °C, il retrouve sa forme initiale au bout d'environ 15 secondes.

On coupe alors l'anneau en un point puis on l'allonge d'environ 3 fois à température ambiante. La nouvelle forme allongée se fige en l'état. Lorsque l'objet ainsi obtenu est plongé dans l'eau chaude à 60 °C, il revient à sa forme annulaire initiale au bout d'environ 5 secondes.

Exemple 5

On fabrique par moulage à une température de 160 °C, pendant 15 minutes et sous une pression de 100 kg/cm², à partir de la poudre polymère de l'exemple 3, une feuille d'épaisseur 0,3 mm, largeur 30 mm et longueur 150 mm. On enroule cette feuille sur un mandrin en fer de diamètre 5 mm dans l'air chaud à 40 °C. Après refroidissement jusqu'à la température ambiante, on obtient un rouleau. Lorsqu'on place à nouveau celui-ci dans l'air chaud à 40 °C, on retrouve la feuille dans sa forme initiale au bout d'environ 15 secondes.

Exemple 6

On ajoute 2 parties d'un composé huileux (huile naphténique commercialisée par NIPPON SUN OIL Co. Ltd. sous la marque SUNTHENE-255) à 100 parties en poids de la poudre polymère de l'exemple 3. A partir de ce mélange on fabrique par moulage à une température de 150 °C, pendant 15 minutes et sous une pression de 150 kg/cm², un objet cylindrique de diamètre 25 mm et hauteur 12 mm. Au moyen de pinces on comprime cet objet dans l'eau chaude à 50 °C pour lui conférer une déformation importante, puis immédiatement après on le plonge dans l'eau à 25°C pour figer la nouvelle forme. En plongeant l'objet dans l'eau chaude à 50 °C, on retrouve sa forme initiale au bout d'environ 20 secondes.

Exemple 7

On mélange 100 parties en poids de la poudre polymère de l'exemple 3 avec 2 parties en poids du composé huileux de l'exemple 6, 5 parties en poids d'oxyde de zinc, 1 partie en poids d'acide stéarique, 1,5 partie en poids de soufre et 5 parties en poids de cyclohexylbenzothiazylsulfenamide en tant qu'accélérateur de vulcanisation. A partir de ce mélange on fabrique par moulage, dans les conditions de l'exemple 6, une feuille d'épaisseur 2 mm, largeur 30 mm et longueur 150 mm. Cette feuille est soumise à une torsion hélicoïdale dans l'eau chaude à 50 °C, puis on la fige dans cet état en la plongeant dans l'eau a 25 °C. Lorsqu'on la plonge à nouveau dans l'eau chaude à 50 °C, on retrouve la forme initiale de la feuille au bout d'environ 15 secondes.

Exemple 8

On fabrique par moulage, dans les conditions de l'exemple 1, à partir d'un mélange de 60 parties en poids de la poudre polymère de l'exemple 1 et de 40 parties en poids d'une résine d'hydrocarbures commercialisée par CdF CHIMIE sous la marque NORSOLENE SP 70, une plaque de 2 mm d'épaisseur. On procède à 25 °C à un pliage d'angle 180° sur cette plaque : le pliage subsiste après relâchement de la contrainte. Lorsqu'on immerge la plaque pliée dans l'eau chaude à 42 °C, elle revient à sa forme initiale.

**Revendications**

1. Produits finis en matériau polymère à fonction mémoire de forme et de dimension du produit, constitués d'une composition comprenant :
- au moins un polymère (A) choisi parmi :
  • les homopolymères et copolymères amorphes et semi-cristallins du norbornène et de ses dérivés alcoylés, cyanés, alcoxylés, mono- ou diestérifiés, imides et acides carboxyliques,

• les homopolymères et copolymères du diméthanooctahydronaphtalène et de ses dérivés, et

• les copolymères du diméthanooctahydro-naphtalène et d'un monomère choisi parmi le norbornène et ses dérivés, le styrène, l'acénaphty-lène et le dicyclopentadiène, et

- au moins un polymère thermoplastique (B), caractérisés en ce que ladite composition comprend au moins 25 % en poids du polymère (A) et au plus 75 % en poids du polymère thermoplastique (B).

2. Produits finis selon la revendication 1, caractérisés en ce que ledit polymère A a un poids moléculaire compris entre 300 000 et 4 000 000.

3. Produits finis selon l'une des revendications 1 et 2, caractérisés en ce que ledit polymère A a une température de transition vitreuse comprise entre —90° et + 200 °C.

4. Produits finis selon la revendication 3, caractérisés en ce que ledit polymère A a une température de transition vitreuse comprise entre + 10 °C et + 120 °C.

5. Produits finis selon l'une des revendications 1 à 4, caractérisés en ce que ledit polymère A est halogéné ou hydrogéné.

6. Produits finis selon l'une des revendications 1 à 5, caractérisés en ce que ledit polymère thermoplastique B est choisi parmi le polystyrène, le polyéthylène, le polypropylène, le polybutène-1, le polychlorure de vinyle, le polymethacrylate de méthyle, les copolymères acrylonitrile-butadiène-styrène et les résines d'hydrocarbures.

7. Produits finis selon l'une des revendications 1 à 6, caractérisés en ce que ladite composition comprend en outre jusqu'à 10 % en poids d'un composé huileux, la somme des différents composants étant de 100 %.

8. Produits finis selon l'une des revendications 1 à 6, caractérisés en ce que ladite composition comprend en outre jusqu'à 10 % en poids d'un agent réticulant, la somme des différents composants étant de 100 %.

## Claims

1. Articles made of a polymeric material having shape and dimension recovering properties, consisting of a composition comprising :
- at least one polymer (A) selected from :
• amorphous and semi-crystalline homopolymers and copolymers of norbornene and its alkylated, cyano, alkoxylated, mono- or diesterified, imides and carboxylic acids derivatives,
• homopolymers and copolymers of di-methanooctahydronaphtalene and its derivatives, and
• copolymers of dimethanooctahyd-ronapahtalene and of a monomer selected from norbornene and its derivatives, styrene, acenaphtylene and dicyclopentadiene, and
- at least one thermoplastic polymer (B), wherein said composition comprises at least 25 % by weight of the polymer (A) and at the most 75 % by weight of the thermoplastic polymer (B).

2. Articles according to claim 1, wherein said polymer (A) has a molecular weight of between 300 000 and 4 000 000.

3. Articles according to either of claims 1 and 2, wherein said polymer (A) has a glass transition temperature of between — 90 °C and + 200 °C.

4. Articles according to claim 3, wherein said polymer (A) has a glass transition temperature of between + 10 °C and + 120 °C.

5. Articles according to one of claims 1 to 4 wherein said polymer (A) is halogenated or hydrogenated.

6. Articles according to one of claims 1 to 5, wherein said thermoplastic polymer (B) is selected from polystyrene, polyethylene, polypropylene, polybut-1-ene, polyvinylchloride, polymethylmethacrylate, acrylonitrile-butadienestyrene copolymers and hydrocarbon resins.

7. Articles according to one of claims 1 to 6, wherein said composition further comprises till 10 % by weight of an oily component. The sum of the different components makes 100 %.

8. Articles according to one of claims 1 to 6, wherein said composition further comprises till 10 % by weight of a crosslinking agent. The sum of the different components makes 100 %.

## Patentansprüche

1. Fertigprodukte aus Polymermaterial mit Produktform- und Abmessungsgedächtnis, welche von einer Zusammensetzung gebildet sind, die enthält :
- mindestens ein Polymer (A) ausgewählt aus der Gruppe bestehend aus
• den amorphen und semikristallinen Homo-und Copolymeren von Norbornen und seinen Alkyl-, Cyan-, Alkoxy-, Mono- oder Diester-, Imid-und Karbonsäurederivaten,
• den Homo- und Copolymeren von Dimetha-noctahydronaphthalin und seinen Derivaten,
• den Copolymeren von Dimethanoctahydro-naphthalin und einem Monomer, das ausgewählt ist aus der Gruppe bestehend aus Norbornen und seinen Derivaten, Styrol, Acenaphthylen und Dicyclopentadien, und
- mindestens ein thermoplastisches Polymer (B), dadurch gekennzeichnet, daß die genannte Zusammensetzung mindestens 25 Gew.-% an Polymer (A) und höchstens 75 Gew.-% an thermoplastischem Polymer (B) enthält.

2. Fertigprodukte nach Anspruch 1, dadurch gekennzeichnet, daß das genannte Polymer (A) ein Molekulargewicht zwischen 300 000 und 4 000 000 besitzt. 3. Fertigprodukte nach Anspruch 1 oder 2, dadurch gekennzeichnet, daß das genannte Polymer (A) eine Glasübergangstemperatur zwischen —90° und + 200 °C besitzt.

4. Fertigprodukte nach Anspruch 3, dadurch gekennzeichnet, daß das genannte Polymer (A) eine Glasübergangstemperatur zwischen + 10° und + 120 °C besitzt.

5. Fertigprodukte nach einem der Ansprüche 1 bis 4, dadurch gekennzeichnet, daß das genannte Polymer (A) halogeniert oder hydriert ist.

6. Fertigprodukte nach einem der Ansprüche 1 bis 5, dadurch gekennzeichnet, daß das genannte thermoplastische Polymer (B) ausgewählt ist aus der Gruppe bestehend aus Polystyrol, Polyethylen, Polypropylen, Polybuten-1, Polyvinylchlorid, Polymethylmethacrylat, den Acrylnitril/Butadien/Styrol-Copolymeren und den Kohlenwasserstoffharzen.

7. Fertigprodukte nach einem der Ansprüche 1 bis 6, dadurch gekennzeichnet, daß die genannte Zusammensetzung weiters bis zu 10 Gew.-% einer öligen Verbindung enthält, wobei die Summe der verschiedenen Bestandteile 100 % ausmacht.

8. Fertigprodukte nach einem der Ansprüche 1 bis 6, dadurch gekennzeichnet, daß die genannte Zusammensetzung weiters bis zu 10 Gew.-% eines Vernetzungsmittels enthält, wobei die Summe der verschiedenen Bestandteile 100 % ausmacht.